**Europäisches Patentamt**

**European Patent Office**

**Office européen des brevets**

(19)

(11) Veröffentlichungsnummer: **0 082 416**
**A1**

(12) # EUROPÄISCHE PATENTANMELDUNG

(21) Anmeldenummer: 82111390.9

(22) Anmeldetag: 08.12.82

(51) Int. Cl.³: **G 03 B 27/62**

(30) Priorität: 18.12.81 DE 3150223
18.12.81 DE 3150224

(43) Veröffentlichungstag der Anmeldung:
29.06.83 Patentblatt 83/26

(84) Benannte Vertragsstaaten:
FR GB IT

(71) Anmelder: AGFA-GEVAERT Aktiengesellschaft

D-5090 Leverkusen 1(DE)

(72) Erfinder: Wetzel, Günter
Kath.-Eberhard-Strasse 4-6
D-8013 Haar(DE)

(54) **Vorlagenzuführeinrichtung für Kopiergeräte.**

(57) In einer Vorlagenzuführeinrichtung für Kopiergeräte mit einer Wendeeinrichtung für die mittels einer Vereinzelungsvorrichtung der Unterseite des Vorlagenstapels (6) entnommenen Vorlagen wird die Wendeeinrichtung von einem Transportzylinder (3) gebildet, an welchem eine Saugdüsenleiste (8) schwenkbar gelagert ist. Vorzugsweise ist die Belichtungsstelle für die Vorlagen an diesem Transportzylinder angeordnet. Die Saugdüsenleiste (8) wird zur Vereinzelung der Vorlagen an die Stapelunterseite angeschwenkt und hält die vereinzelte Vorlage während ihrer Ablichtung und/oder bis zu ihrer Übergabe an ständig umlaufende Förder- und Transportrollen (13, 14) fest. Während des Vereinzelungsvorganges drückt ein Niederhalter (13, 14) von oben auf den Stapel, um die richtige Anlage der zu vereinzelnden Vorlagen an die Saugdüsenleiste (8) zu gewährleisten. Zum schnellen Mehrfachkopieren kann die Vorlage für mehrere Umläufe auf dem Transportzylinder (3) verbleiben. Eine weitere Transporteinrichtung erlaubt die Einzeleingabe von im Durchlaufverfahren abzulichtenden Vorlagen. Durch diese Anordnung wird in einfacher Weise eine sichere Vereinzelung, Förderung und Wendung von Vorlagen unterschiedlicher Beschaffenheit sowie eine wahlweise ein- oder mehrfache Ablichtung von Vorlagen ermöglicht.

Fig.1

EP 0 082 416 A1

AGFA-GEVAERT AG LEVERKUSEN
Camera-Werk München
Patent- und Lizenzwesen

CW 2612.0 PB/CW 2615.3 PB-EP                    10. Aug. 1982
                                               51-bg-se, 0879C


Vorlagenzuführeinrichtung für Kopiergeräte


Die Erfindung betrifft eine Vorlagenzuführeinrichtung für Kopiergeräte,
mit einem über der Belichtungsstelle des Kopiergerätes angeordneten Vorratsstapel für die Vorlagen, mit einer Vereinzelungsvorrichtung zur Abnahme der mit der abzulichtenden Seite nach oben gestapelten Vorlagen von
der Unterseite des Vorratsstapels und mit einer Fördereinrichtung, welche
die vom Stapel abgenommenen Vorlagen wendet und mit der abzulichtenden
Seite nach unten der Belichtungsstelle des Kopiergerätes zuführt.

Eine Vorlagenzuführeinrichtung der vorstehenden Art ist u.a. Gegenstand
der DE-OS 29 08 398. Dabei erfolgt die Vereinzelung der Vorlagen mittels
mit Bremsrollen zusammenarbeitender Einzugsrollen, welche die Vorlagen
einer der Umlenkung der Vorlagen dienenden zylindrischen Führung zuführen.

Eine derartige Vereinzelungsvorrichtung ist nicht geeignet, bezüglich Papierqualität und Erhaltungszustand sehr unterschiedliche Vorlagen, wie sie einem Kopiergerät üblicherweise zugeführt werden, mit ausreichender Sicherheit zu trennen. Außerdem treten beim Umlenken der Vorlagen an der zylindrischen Führung verhältnismäßig große Reibungskräfte auf.

Es ist auch schon bekannt, die Vereinzelung von blattförmigen Gegenständen verschiedener Beschaffenheit dadurch sicherer zu gestalten, daß diese blattförmigen Gegenstände mittels einer an eine Saugeinrichtung angeschlossenen Düsenleiste erfaßt werden. Diese Anordnung, wie sie z.B. die US-PS 3,934,864 zeigt, ist verhältnismäßig aufwendig und ist zudem nicht in der Lage, gleichzeitig das Wenden der Vorlagen zu übernehmen.

Es ist das Ziel der vorliegenden Erfindung, eine Einrichtung der vorstehenden Art in der Weise auszugestalten, daß Vorlagen unterschiedlicher Beschaffenheit sicher vereinzelt, in einfacher Weise gewendet, der Belichtungsstelle zugeführt und wahlweise ein- oder mehrmals abgelichtet werden können.

Diese Aufgabe wird gemäß der Erfindung durch die im Kennzeichen von Anspruch 1 aufgeführten Merkmale gelöst. Einzelheiten der Erfindung ergeben sich aus den Unteransprüchen und der Beschreibung, worin im folgenden anhand der Zeichnung ein Ausführungsbeispiel erörtert wird. Es zeigen

Figuren 1-3    einen Schnitt durch eine erfindungsgemäße Einrichtung in verschiedenen Betriebsstellungen,

Figur 4    das Schaltschema der zum Betrieb der Einrichtung erforderlichen Schalteinrichtung,

Figur 5    einen Schnitt durch eine andere Ausführungsform der erfindungsgemäßen Vorlagenzuführeinrichtung,

Figur 6      einen Schnitt durch den Transportzylinder der zuletzt genannten Einrichtung, und

Figur 7      ein Detail des Schaltschemas dieser Einrichtung.


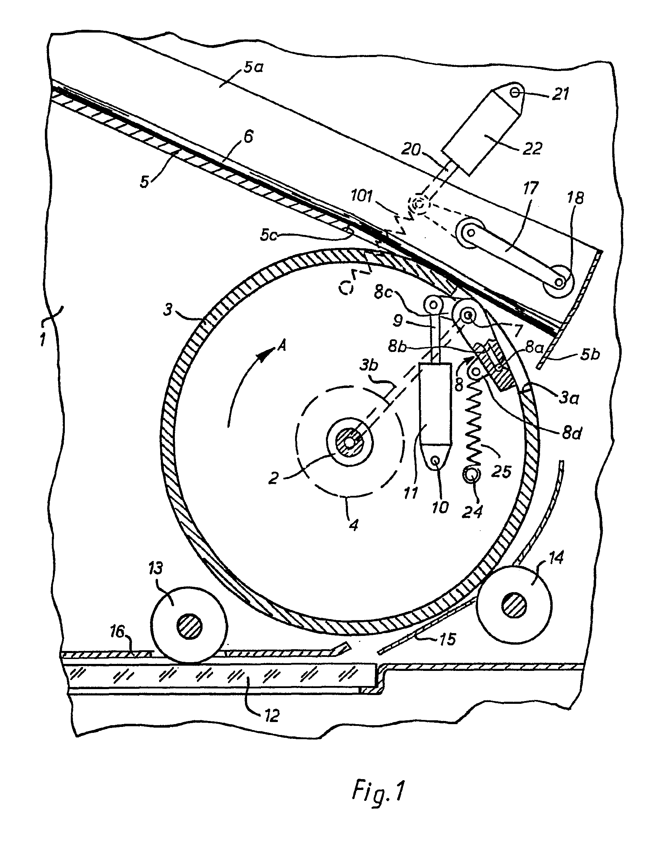

Gemäß den Figuren 1-3 ist in einem Gerätegestell 1 eine Welle 2 gelagert,
welche bei eingeschaltetem Gerät durch einen nicht dargestellten Antriebsmotor kontinuierlich angetrieben wird. Auf der Welle 2 ist ein
Transportzylinder 3 gelagert, welcher mittels einer Magnetkupplung 4 an
die Welle 2 angekuppelt werden kann.

Oberhalb des Transportzylinders 3 ist eine Stapelauflagefläche 5 für
einen Vorlagenstapel 6 angeordnet. Die Auflagefläche 5, welche von seitlichen Wänden 5a und einem vorderen Stapelanschlag 5b begrenzt ist, verläuft an ihrem zylinerseitigen Ende etwa tangential zur Oberfläche des
Transportzylinders 3. Sie weist in diesem Bereich eine Ausnehmung   5c
auf, welche sich bis zum vorderen Stapelanschlag 5b erstreckt. An dieser
Stelle biegt sich der nicht unterstützte Stapel etwas durch, so daß sich
das unterste Blatt auf der Oberfläche des Transportzylinders 3 abstützt.

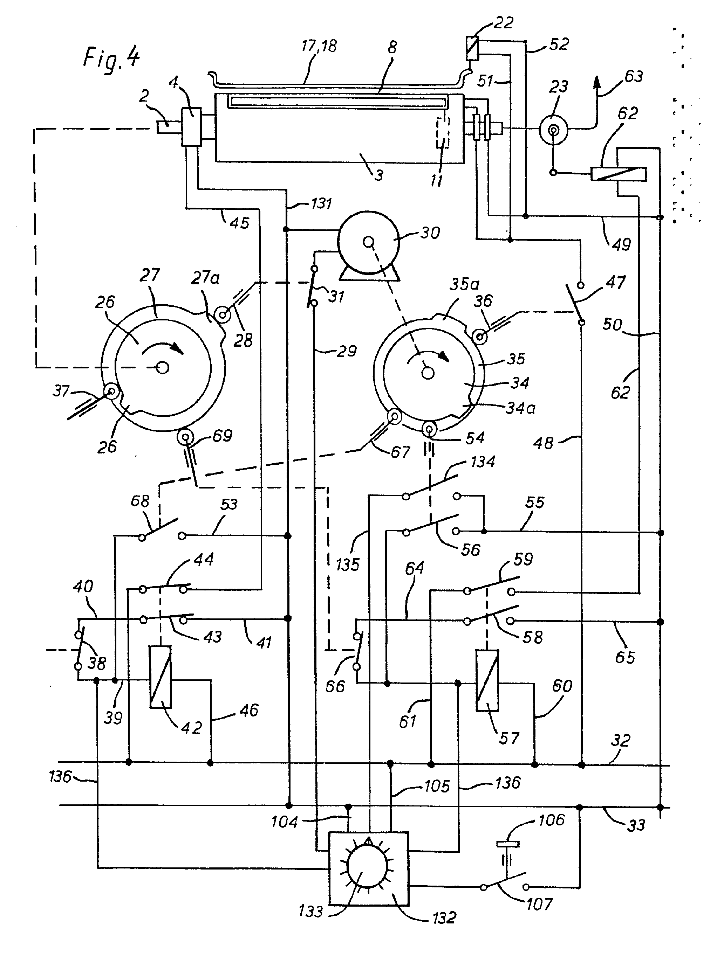

In einer am Umfang des Transportzylinders 3 angebrachten Ausnehmung 3a
ist auf einer Welle 7 eine schwenkbare Saugdüsenleiste 8 gelagert, an deren Oberseite eine Reihe von Saugdüsen 8a angeordnet sind. Die Saugdüsen 8a sind mittels Kanälen 8b mit einer zentralen Bohrung der Welle 7
verbunden, welche ihrerseits über einen Kanal 3b des Transportzylinders 3
mit einer Ringnut der Welle 2 Verbindung hat. Die Ringnut ist mittels
einer an geeigneter Stelle angebrachten Bohrung an eine zentrale Bohrung
der Welle 2 angeschlossen. Diese zentrale Bohrung ist in bekannter Weise
bis an das Wellenende durchgeführt, wo sie in eine, in der Zeichnung
nicht dargestellte, Zentralkupplung bekannter Art für eine Vakuumleitung 63 (Fig. 4) mündet, welche die Saugdüsen mit einer Vakuumpumpe bzw.
einem entsprechenden Vorratsbehälter verbindet.


CW 2612.0 PB/CW 2615.3 PB-EP

Zum Verschwenken der Saugdüsenleiste 8 trägt diese einen Arm 8c, an welchem die Zugstange 9 eines an einem Zapfen 10 des Transportzylinders 3 gelagerten Zugmagneten 11 angelenkt ist.

Unterhalb des Transportzylinders 3 ist eine transparente Auflageplatte 12 angeordnet, welcher die vom Stapel 6 abgezogenen Vorlagen während ihrer Ablichtung aufliegen. Zur Förderung der Vorlagen über die transparente Auflageplatte 12 liegt dieser eine in bekannter Weise angetriebene Förderrolle 13 an, welche auf der Auflageplatte 12 gleitet, solange sich auf dieser keine zu befördernde Vorlage befindet. Ferner liegt auch dem Umfang des Transportzylinders 3 eine Andruck- und Förderrolle 14 an, welche die vom Stapel 6 abgezogenen Vorlagen erfaßt, bevor sie den Transportzylinder 3 verlassen und der transparenten Auflageplatte 12 zugeführt werden. Zur sicheren Führung der Vorlagen in diesem Bereich sind außerdem Leitbleche 15 und 16 vorgesehen.

Schließlich ist noch oberhalb des zylinderseitigen Stapelendes ein schwenkbarer Niederhalter 17 gelagert, welcher Andruckrollen 18 trägt, die an das vordere Ende des Stapels angedrückt werden können, um die Vorlagen im geeigneten Augenblick an die Saugdüsenleiste 8 anzudrücken und eventuelle Unebenheiten der Vorlagen, welche ihre einwandfreie Anlage an den Saugdüsen 8a beeinträchtigen könnten, auszugleichen. Zum Verschwenken des Niederhalters 17 dient ein auf seiner Achse sitzender Schwenkhebel 19, an welchem die Zugstange 20 eines an einem Zapfen 21 schwenkbar gelagerten Zugmagneten 22 angelenkt ist. Das Rückstellen des Niederhalters besorgt eine ebenfalls am Schwenkhebel 19 angelenkte Rückholfeder 101.

Die Wirkungsweise der vorstehend beschriebenen Vorrichtungen ist nun folgende:

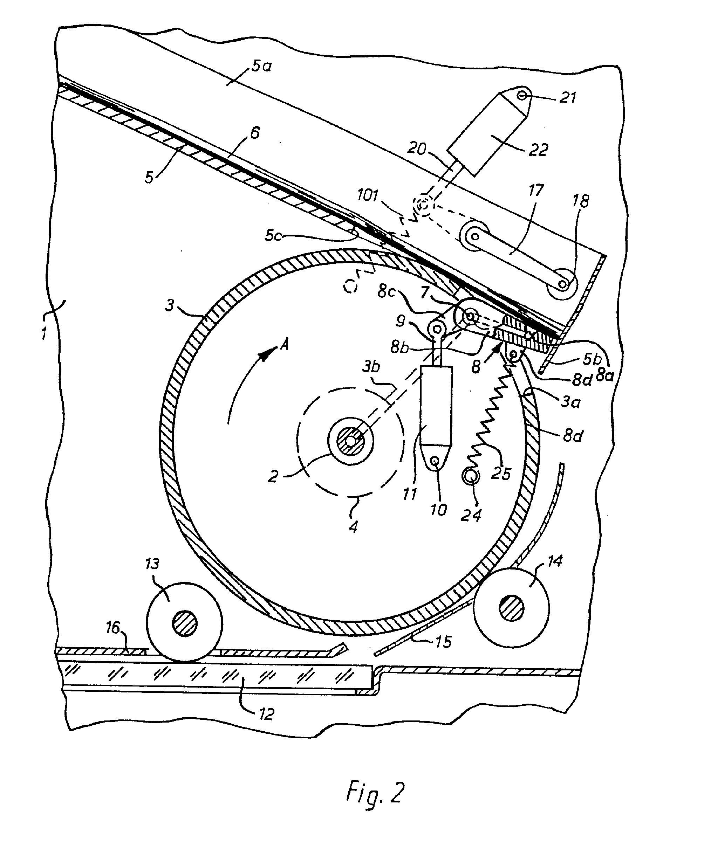

In der Ausgangsstellung des Transportzylinders 3 befindet sich die Saug-düsenleiste 8 in der in Figur 1 gezeigten Stellung unterhalb der Ausnehmung 5c der Stapelauflagefläche 5. Zu Beginn des Vereinzelungs- und Fördervorganges wird sie, wie in Figur 2 gezeigt, mittels des Zugmagneten 11 an das unterste Blatt des Stapels 6 angeschwenkt, die Saugdüsen 8a werden eingeschaltet und die Andruckrollen 18 werden durch Betätigung des Zugmagneten 22 an den Stapel angeschwenkt. Das Einschalten der Saugdüsen 8a erfolgt durch Betätigung eines aus Figur 4 ersichtlichen Ventiles 23.

Anschließend werden die Zugmagneten 11 und 22 ausgeschaltet, wodurch die Saugdüsenleiste 8 unter der Wirkung der Zugfeder 25 sowie der Niederhalter 17, 18 unter der Wirkung der Zugfeder 101 vom Stapel abgeschwenkt werden. Die vorderste Kante der zu vereinzelnden Vorlage wird vom Stapel 6 abgeklappt, wodurch eine sehr sichere Trennung der vereinzelten Vorlage vom übrigen Stapel erzielt wird.

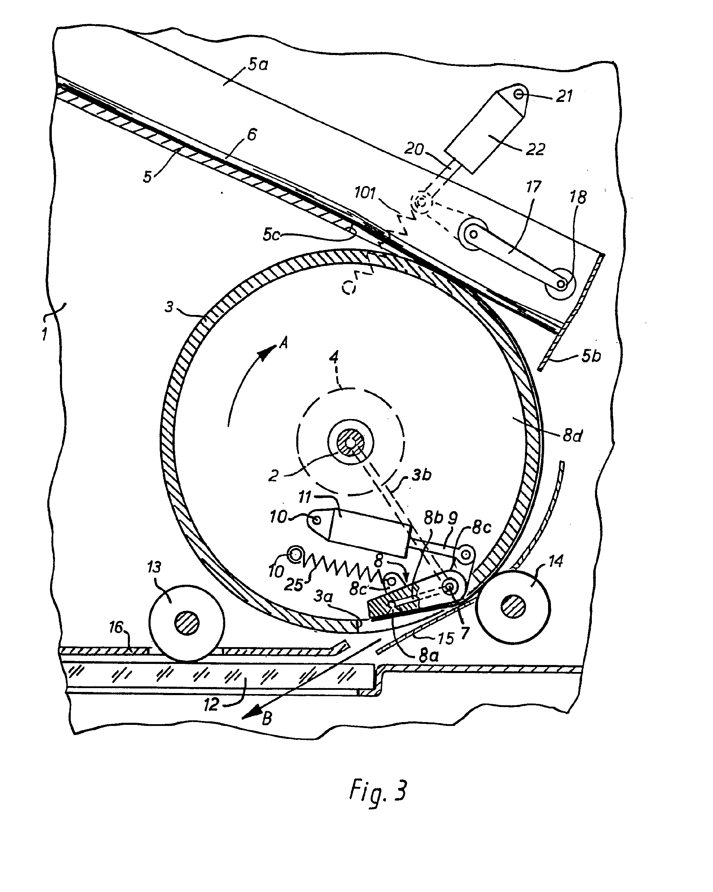

Der Transportzylinder 3 wird nunmehr in Pfeilrichtung A in Bewegung gesetzt, wodurch die von der Saugdüsenleiste vereinzelte Vorlage vom Stapel abgezogen und der Förderrolle 14 zugeführt wird. Sobald die in Figur 3 gezeigte Stellung des Transportzylinders 3 erreicht ist, wird die Saugluft ausgeschaltet. Das vordere Ende der von der Saugdüsenleiste 8 erfaßten Vorlage federt vom Transportzylinder ab und legt sich an die äußere Führung 15 an, so daß es bei der weiteren Drehung des Transportzylindes 3 in Pfeilrichtung B unter die Führung 16 einlaufen und unter die weitere Förderrolle 13 gelangen kann.

Von der Förderrolle 13 wird die Vorlage in bekannter Weise zunächst über die transparente Auflageplatte 12 transportiert, dort zur Ablichtung durch eine in der Figur nicht dargestellte, unterhalb der transparenten Auflagefläche 12 angeordnete Belichtungseinrichtung festgehalten und anschließend aus dem Kopiergerät ausgestoßen oder zur wiederholten Ablichtung von oben wieder auf den Stapel 6 aufgelegt.

CW 2612.0 PB/CW 2615.3 PB-EP

Die Steuerung des vorstehend geschilderten Vereinzelungs- und Fördervorganges erfolgt mittels der in Figur 4 dargestellten Steuereinrichtung wie folgt:

Mit der Welle 2 des Transportzylinders 3 sind Kurvenscheiben 26 und 27 getrieblich verbunden, welche in Pfeilrichtung C umlaufen. Die Kurvenscheibe 27 trägt einen Nocken 27a, welcher mit einem Stößel 28 zusammenarbeitet. Dieser Stößel 28 betätigt einen in einer Zuleitung 29 eines Antriebsmotors 30 liegenden Schalter 31. Der Antriebsmotor 30 treibt weitere Kurvenscheiben 34 und 35 in Pfeilrichtung D an. Bei der gezeigten Stellung der Kurvenscheibe 27 bzw. des Schalters 31 ist der Antriebsmotor 30 eingeschaltet, soweit auch ein in einer Steuereinheit 103 enthaltenes Relais durchschaltet ist. Die Zuleitung 29 des Antriebsmotors 30 ist dann über die Zuleitung 105 der Steuereinheit 103 mit dem Netzleiter 32 verbunden. Die Verbindung eines weiteren Netzleiters 33 mit der Steuereinheit und mit dem Antriebsmotor 30 wird durch Leiter 104 und 131 hergestellt. Das in der Steuereinheit 103 enthaltene Relais ist so geschaltet, daß sein Haltestromkreis im Stromkreis des Motors 30 liegt, so daß es nach jedem Ausschalten des Motors 30 abfällt und durch Drücken einer auf einen Startschalter 107 wirkenden Starttaste 106 neu eingeschaltet werden muß.

Beim weiteren Umlauf der Kurvenscheiben 26 und 27 bzw. 34 und 35 erreicht zunächst der Nocken 26a der Kurvenscheibe 26 den mit diesem Nocken zusammenarbeitenden Stößel 37, welcher einen Schalter 38 steuert. Der Schalter 38 liegt im Haltestromkreis 39 bis 41 eines Relais 42, welcher in dieser Betriebsphase über den Haltekontakt 43 des Relais 42 geschlossen ist. Der Arbeitskontakt 44 des Relais 42 verbindet dabei über Leitungen 131 und 45 die Magnetkupplung 4 mit dem Netzleiter 32, 33, wodurch der Transportzylinder 3 mit der Welle 2 gekuppelt wird. Die Rückleitung des Stromes vom Relais 42 zum Netzleiter 33 erfolgt über eine Leitung 46.

Sobald nun der Nocken 26a den Stößel 37 angehoben hat, wird der Haltestromkreis des Relais 42 über den Schalter 38 unterbrochen. Das Relais 42 fällt ab, wodurch die Kupplung 4 ausgeschaltet wird und der Transportzylinder 3 sowie auch die getrieblich mit ihm verbundenen Kurvenscheiben 26 und 27 in der der in Figur 1 dargestellten Stellung entsprechenden Stellung zum Stillstand kommen. Der Nocken 27a der Steuerkurve 27 ist so ausgelegt, daß in dieser Stellung der Kurvenscheibe 27 der Stößel 28 noch angehoben bleibt, so daß der Motor 30 bzw. die Kurvenscheiben 34 und 35 weiterlaufen.

Bei der weiteren Drehung der Kurvenscheiben 34 und 35 in Pfeilrichtung D hebt der Nocken 35a der Kurvenscheibe 35 den Stößel 36 an. Dieser betätigt einen in einer mit dem Netzleiter 33 verbundenen Leitung 48 liegenden Schalter 47. Die Leitung 48, wie auch eine weitere Leitung 49, ist über Schleifkontakte mit dem im Innern des Transportzylinders 3 angeordneten Magneten 11 verbunden. Die Rückleitung des Stromes zum Netzleiter 32 erfolgt mittels einer Leitung 50. Bei geschlossenem Schalter 47 ist somit der Zugmagnet 11 erregt und die Saugdüsenleiste 8 wird in der in Figur 2 gezeigten Weise an die Unterseite des Stapels 6 angeschwenkt. Gleichzeitig ist über Leitungen 51, 52 auch der Zugmagnet 22, welcher den Niederhalter 17, 18 an den Stapel anschwenkt, eingeschaltet. Natürlich könnte der zuletzt genannte Zugmagnet 22 im Bedarfsfall auch durch eine eigene Kurvenscheibe bzw. durch einen eigenen Schalter zu von den Schaltzeiten des Zugmagneten 11 abweichenden Schaltzeiten gesteuert werden.

Kurz nach dem Anheben des Stößels 36 durch den Nocken 35a der Kurvenscheibe 35 erreicht ein Nocken 34a der Kurvenscheibe 34 den mit ihm zusammenarbeitenden Stößel 54. Dieser schaltet über einen in einer Leitung 55 liegenden Schalter 56 ein Relais 57 ein, welches einen Arbeitskontakt 58 und einen Haltekontakt 59 betätigt. Das Relais 57 ist bei geschlossenem Schalter 56 einerseits über die Leitungen 55 und 59 und andererseits über eine Leitung 60 an den Netzleiter 32, 33 angeschlossen.

Sein Arbeitskontakt 59 schließt über Leitungen 61, 62 sowie eine Leitung 50 einen Zugmagneten 62 an den Netzleiter 32, 33 an, wodurch das Ventil 23 einer Saugleitung 63 geöffnet und diese Saugleitung an ein nicht näher dargestelltes Saugluftsystem des Kopiergerätes angeschlossen wird. Die Saugleitung 63 ist in bekannter Weise über eine an die Welle 2 des Transportzylinders 3 gelegte Zentralkupplung an die Saugdüsenleiste 8 angeschlossen. Der vom Relais 57 betätigte Schalter 58, welcher in einem Haltestromkreis 59, 60, 64 und 65 des Relais 57 liegt, hindert das Relais 57 am Abfallen, so daß die Saugdüsenleiste 8 an die Saugluft angeschlossen bleibt, bis ein in diesem Haltestromkreis liegender Unterbrechungsschalter 66 geöffnet wird.

Kurz nach Betätigung des das Einschalten der Saugdüsenleiste 8 bewirkenden Stößel 54 durch den Nocken 34a erreicht derselbe Nocken 34a einen Stößel 67, welcher mit einem in einer Leitung 53 des Relais 42 liegenden Schalter 68 verbunden ist. Dadurch wird das Relais 42 eingeschaltet und der Transportzylinder 3 wieder mit der ständig umlaufenden Welle 2 gekuppelt. Damit beginnen auch die Kurvenscheiben 27 und 28 wieder in Pfeilrichtung C zu laufen. Der Nocken 27a, welcher zu diesem Zeitpunkt noch unter dem Stößel 28 steht und dadurch den Motor 30 am Laufen hält, dreht sich unter dem Stößel 28 hinweg, so daß der Motor 30 zum Stillstand kommt. Dies darf aber erst erfolgen, wenn der Nocken 34a der Kurvenscheibe 34 den Stößel 67 freigegeben bzw. den damit verbundenen Schaltkontakt 68 geöffnet hat, weil sonst der Transportzylinder 3 beim nächsten Umlauf nicht mehr durch den Nocken 26a der Kurvenscheibe 26 bzw. den Unterbrechungsschalter 38 zum Stillstand gebracht werden könnte.

Der Transportzylinder 3 setzt nunmehr seine Drehung in Pfeilrichtung A solange fort, als das Relais 42 durch seinen Haltestromkreis am Abfallen gehindert wird. Dabei gelangt der Transportzylinder 3 in die in Figur 3 dargestellte Stellung, in welche er die durch die Saugdüsenleiste 8 angesaugte Vorderkante der vom Stapel 6 vereinzelten Vorlage mitnimmt. In dieser Stellung erreicht der Nocken 27a der Kurvenscheibe 27 den Stößel 69, welcher den im Haltestromkreis des Relais 57 liegenden Schalter 66 öffnet. Das Relais 57 fällt ab und das Saugluftventil 23 wird geschlossen. Dadurch löst sich die transportierte Vorlage in der vorher beschriebenen Weise vom Transportzylinder 3 und wird an die Förderwalzen 13 und 14 übergeben. Der Transportzylinder 3 setzt seine Drehung in Pfeilrichtung A fort, bis er in seine in Figur 1 bzw. Figur 4 dargestellte Ausgangsstellung gelangt.

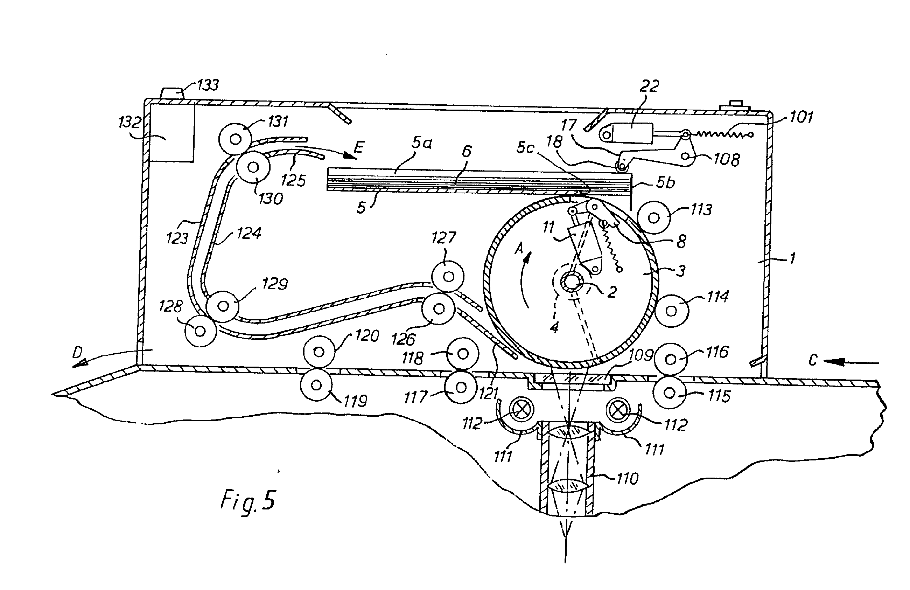

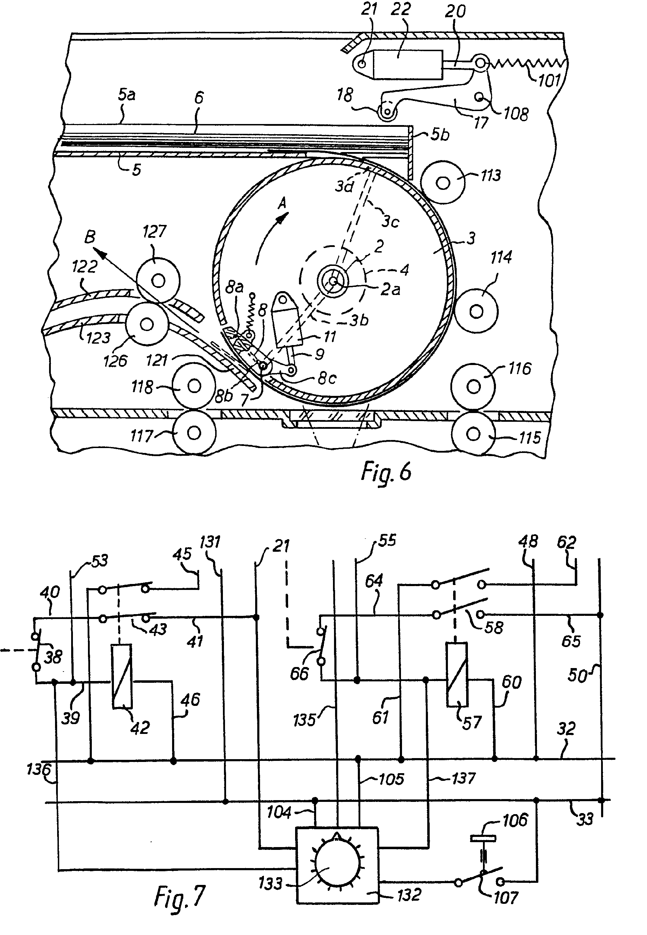

Gemäß Figur 5 ist unterhalb des Transportzylinders 3 eine transparente Platte 109 angeordnet, an welcher die vom Stapel 6 abgezogenen Vorlagen während ihrer Ablichtung vorbeitransportiert werden. Die transparente Platte 109 liegt im Bildfeld einer Rasterabbildungsanordnung 110, welches von zwei in je einem Reflektor 111 angeordneten Leuchtstoffröhren 112 beleuchtet wird. Diese Rasterabbildungsanordnung projiziert das Bild der dem durch die transparente Platte 109 gebildeten Bildfenster vorbeibewegten Vorlage auf einen in der Zeichnung nicht dargestellten, mit entsprechender Geschwindigkeit bewegten Aufzeichnungsträger. Zur Verbesserung des Andrucks der abzulichtenden Vorlagen am Umfang des Transportzylinders 3 liegen diesem Andruckrollen 113 und 114 an. Außerdem ist am Umfang des Transportzylinders 3 eine weitere Reihe von Saugdüsen 3d angeordnet (Fig. 6), welche das hintere Ende der vom Stapel 6 abgezogenen Vorlage erfaßt und am Transportzylinder 3 festhält. Diese Saugdüsen 3d sind mittels eines Kanales 3c mit der zentralen Bohrung 2a der Welle 2 verbunden.

Zu beiden Seiten der transparenten Platte 109 sind angetriebene Transportrollenpaare 115, 116 bzw. 117, 118 bzw. 119, 120 angeordnet, welchen abzubildende Vorlagen in Pfeilrichtung C von Hand zugeführt werden können. Nach ihrer Abbildung werden die Vorlagen in Pfeilrichtung D aus dem Gerät ausgeführt.

Ferner schließen sich dem Transportzylinder 3 Leitbleche 121-125 und angetriebene Förderrollenpaare 126-131 an, welche die vom Transportzylinder 3 erfaßten Vorlagen nach ihrer Ablösung von dessen Oberfläche zum Stapel 6 zurückbefördern, auf welchen sie in Pfeilrichtung E abgelegt werden.

Die Wirkungsweise der zuletzt beschriebenen Vorrichtungen entspricht der Wirkungsweise der in den Figuren 1-4 dargestellten Vorrichtung, mit dem Unterschied, daß die von der Saugdüsenleiste vereinzelte bzw. vom Stapel abgezogene Vorlage mittels des Abbildungssystems 110 bereits abgelichtet wird, während sie sich mit dem in Pfeilrichtung A bewegten Transportzylinder 3 an dem von der transparenten Platte 109 gebildeten Belichtungsfenster 109 vorbeibewegt. Sobald die in Figur 6 gezeigte Stellung des Transportzylinders 3 erreicht ist, wird die Saugluft ausgeschaltet. Das vordere Ende der von der Saugdüsenleiste 8 erfaßten Vorlage federt vom Transportzylinder 3 ab und legt sich an das Leitblech 121 an, so daß es bei der weiteren Drehung des Transportzylinders 3 in Pfeilrichtung B zwischen die Leitbleche 122 und 123 einlaufen und von den Förderrollen 126 und 127 erfaßt werden kann. Wahlweise ist auch eine mehrfache Ablichtung der auf dem Transportzylinder festgehaltenen Vorlage möglich, bei welcher die Vorlage erst nach Herstellung der jeweils gewünschten Kopienanzahl an die Förderrollen 126, 127 übergeben wird.

Die Steuerung des vorstehend geschilderten Vereinzelungs- Förder- und Kopiervorganges erfolgt mittels der in Figur 4 dargestellten Steuereinrichtung, mit dem Unterschied daß, wie in Fig. 7 dargestellt, die Steuereinheit 103 durch eine Steuereinheit 132 ersetzt ist. Ein in der Steuereinheit 132 enthaltenes Relais ist, insoweit in Übereinstimmung mit dem in der Steuereinheit 103 enthaltenen Relais, so geschaltet, daß sein Haltestromkreis im Stromkreis des Motors 30 liegt, so daß es nach jedem Ausschalten des Motors 30 abfällt und durch Drücken einer auf einen Startschalter 107 wirkenden Starttaste 106 neu eingeschaltet werden muß. Zu-

- 11 -

sätzlich sind jedoch Relais vorgesehen, um in Abhängigkeit von einer vorgewählten Kopienanzahl die Haltestromkreise für die Magnetkupplung 4 und das Ventil 23 für eine gewisse Anzahl von Umläufen geschlossen zu halten.

Für den Fall, daß mehrere Ablichtungen der auf dem Transportzylinder 3 befindlichen Vorlage gewünscht werden, wird die gewünschte Kopienanzahl an einem Stellknopf 133 der Steuereinheit 132 eingestellt. Dies bewirkt, daß, ausgelöst vom Schaltimpuls eines mit dem Stößel 54 verbundenen Schalters 134, welcher in einer zur Steuereinheit 132 führenden Leitung 135 liegt, die Haltestromkreise der Relais 42 und 57 über je eine zur Steuereinheit 132 gehende Verbindungsleitung 136 bzw. 137 geschlossen bleiben. Dadurch wird sowohl das Schließen des Ventiles 23 als auch das Lösen der Magnetkupplung 4 so lange verhindert, bis ein in der Steuereinheit 132 enthaltenes, ebenfalls durch Impulse des Schalters 134 in Abhängigkeit von der bereits gefertigten Anzahl von Wiederholkopien gesteuertes Schaltwerk den Stellknopf 133 in seine Ausgangsstellung zurückgestellt hat. Die auf dem Transportzylinder 3 befindliche Vorlage läuft dadurch so lange mit dem Transportzylinder 3 um, bis die gewünschte Kopienanzahl hergestellt ist. Erst dann wird sie in vorstehend geschilderter Weise an die Transportwalzen 126, 127 übergeben.

0082416

AGFA-GEVAERT AG LEVERKUSEN
Camera-Werk München
Patent- und Lizenzwesen

CW 2612.0 PB/CW 2615.3 PB-EP

10. Aug. 1982
51-bg-se, 0879C

Ansprüche

1. Vorlagenzuführeinrichtung für Kopiergeräte, mit einem über der Belichtungsstelle des Kopiergerätes angeordneten Vorratsstapel für die Vorlagen, mit einer Vereinzelungsvorrichtung zur Abnahme der mit der abzulichtenden Seite nach oben gestapelten Vorlagen von der Unterseite des Vorratsstapels und mit einer Fördereinrichtung, welche die vom Stapel abgenommenen Vorlagen wendet und mit der abzulichtenden Seite nach unten der Belichtungsstelle des Kopiergerätes zuführt, gekennzeichnet durch folgende Merkmale:

    a)   Es ist ein die Stapelauflagefläche (5) mit der Belichtungsstelle (12) bzw. mit einer zur Belichtungsstelle (12) führenden Transportbahn (12, 15) verbindender Transportzylinder (3) vorgesehen,

CW 2612.0 PB/CW 2615.3 PB-EP

b)   am Umfang des Transportzylinders (3) ist eine schwenkbare Saugdüsenleiste (8) gelagert,

c)   das zylinderseitige Ende der Stapelauflagefläche (15) bildet
eine Tangente an den Umfang des Transportzylinders (3) und ist
mit einer etwa von ihrer Berührungsstelle mit der Zylinderumfangsfläche bis zu einem vorderen Stapelanschlag (5b) reichenden, das Anschwenken der Saugleiste (8) an die an dieser Stelle
frei liegende Unterseite des Vorlagenstapels (6) erlaubenden
Ausnehmung (5c) versehen,

d)   es ist eine Steuervorrichtung (26, 27, 34, 35) vorgesehen, welche den Antrieb des umlaufenden Transportzylinders (3) in der
Stellung, in welcher die an ihm gelagerte Saugleiste (8) sich
im Bereich der Ausnehmung (5c) der Stapelauflagefläche (5) befindet, abschaltet, die Saugleiste (8) an die Unterseite des
Vorlagenstapels (6) anschwenkt, ein Ventil (23) zur Verbindung
der Saugdüsen (8a) der Saugleiste (8) mit einer Saugleitung (63) betätigt, den Antrieb des Transportzylinders wieder
einschaltet und die Saugleiste (8) an den Zylinderumfang zurückschwenkt.

2.   Zuführeinrichtung nach Anspruch 1, dadurch gekennzeichnet, daß dem
Umfang des Transportzylinders (3) und/oder der zur Belichtungsstelle
führenden Transportbahn (12) Andruck- und Transportrollen (13, 14)
zum Weitertransport der vom Vorlagenstapel abgezogenen Vorlagen anliegen.

3.   Zuführeinrichtung nach Anspruch 1 oder 2, dadurch gekennzeichnet,
daß eine Steuereinrichtung (27a, 66) vorgesehen ist, welche zur
Übergabe der Vorlage an die Andruck- und Transportrollen (13, 14)
die an der Saugdüsenleiste (8) liegende Saugluft abschaltet.

4. Zuführeinrichtung nach einem der vorhergehenden Ansprüche, dadurch gekennzeichnet, daß ein an der Oberseite des Vorlagenstapels (6) angeordneter Niederhalter zum Andrücken der Vorlagen an die an den Stapel angeschwenkte Saugdüsenleiste (8) vorgesehen ist.

5. Zuführeinrichtung nach einem der vorhergehenden Ansprüche, dadurch gekennzeichnet, daß am Umfang des Transportzylinders (3) zusätzliche Saugdüsen (3d) zum Festhalten der nicht von der Saugdüsenleiste erfaßten Teile der Vorlage, insbesondere des in Bewegungsrichtung der Vorlage gesehen hinteren Vorlagenendes auf dem Transportzylinder (3) vorgesehen sind.

6. Zuführeinrichtung nach einem der vorhergehenden Ansprüche, dadurch gekennzeichnet, daß dem Transportzylinder (3) eine mit Transportrollen (126-131) versehene Führungsbahn (121-125) zum Rücktransport der abgelichteten Vorlagen auf die Oberseite des Vorlagenstapels (6) nachgeschaltet ist.

7. Zuführeinrichtung nach einem der vorhergehenden Ansprüche, dadurch gekennzeichnet, daß die Steuereinrichtung Schaltmittel (134-137) enthält, welche das Abschalten der Saugluft für eine vorwählbare Anzahl von Umläufen des Transportzylinders (3) unterbindet.

Fig.1

*Fig. 2*

Fig. 3

Fig.4

0082416
4/6

Fig.5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 038 522 (EASTMAN KODAK COMP.) <br> * Seite 2, Zeile 27 - Seite 3, Zeile 16 * | 1 | G 03 B 27/62 |
| A | GB-A-1 532 570 (RANK XEROX LTD.) <br> * Seite 3, Zeilen 5-27 * | 1 | |
| A | US-A-4 033 694 (P.T. FERRARI) <br> * Zusammenfassung * | | |
| A | US-A-4 087 177 (P. GUMM et al.) <br> * Spalte 2, Zeilen 11-35 * | | RECHERCHIERTE SACHGEBIETE (Int. Cl. ³) |
| A | DE-A-1 772 141 (AGFA-GEVAERT) <br> * Anspruch 1 * | | G 03 B 27/00 <br> G 03 G 15/00 <br> G 03 D 13/00 <br> B 65 H 3/00 |
| A | DE-C- 632 999 (A. ROLLER MASCHINENFABRIK) <br> * Seite 1, Zeile 52 - Seite 2, Zeile 9 * | | |
| A,D | DE-A-2 908 398 (SAVIN CORP.) | | |

Der vorliegende Recherchenbericht wurde für alle Patentansprüche erstellt.

| Recherchenort | Abschlußdatum der Recherche | Prüfer |
|---|---|---|
| DEN HAAG | 22-03-1983 | PRATSCH H.R. |